(19) Europäisches Patentamt
European Patent Office
Office européen des brevets

(11) EP 3 412 749 A1

# (12) EUROPEAN PATENT APPLICATION

(43) Date of publication:
**12.12.2018 Bulletin 2018/50**

(51) Int Cl.:
***C09K 8/508** (2006.01)*

(21) Application number: **18175811.1**

(22) Date of filing: **04.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2017 US 201762515171 P**

(71) Applicant: **Covestro LLC**
**Pittsburgh, PA 15205 (US)**

(72) Inventors:
- **ZIELINSKI, David**
  **Cranberry Township, Pennsylvania 16066 (US)**
- **Jeffries, Michael**
  **Follansbee, 260371106 (US)**

(74) Representative: **Levpat**
**c/o Covestro AG**
**Alfred-Nobel-Straße 10**
**40789 Monheim am Rhein (DE)**

## (54) METHODS AND MATERIALS FOR REFRACTURING A PARTIALLY DEPLETED OIL AND GAS WELL

(57) Methods and materials for treating completed oil and gas wells that have been partially depleted as a prelude to refracturing are provided. These methods include: (a) preparing a polyurethane diverting agent by mixing a polyol-containing component and a polyisocyanate-containing component; and (b) introducing the polyurethane diverting agent into the well. The polyol-containing component includes a polymeric polyol having a viscosity at 25°C of no more than 1000 mPa·s and the isocyanate-containing component includes an unblocked (cyclo)aliphatic polyisocyanate polymer, optionally including allophanate groups, and having a viscosity at 25°C of no more than 1000 mPa•s and at least 99% solids content.

EP 3 412 749 A1

## Description

## FIELD OF THE INVENTION

The present invention relates to methods and materials for treating a partially depleted oil and gas well as a prelude to refracturing by introducing a polyurethane diverting agent (chemical diverter) into the well to plug perforations and other non-productive zones of an already completed oil and gas well to allow the well to be re-fractured, thus creating new production of oil and gas from an otherwise depleted well.

## BACKGROUND

The recovery of resources, such as natural gas or oil, from an underground formation typically entails drilling a wellbore to the formation while circulating a drilling fluid, such as a water-based or oilbased drilling mud, within the wellbore. After the wellbore is drilled and completed, these resources are recovered over a period of time at a rate that is inconsistent and which diminishes over time. This general loss of production over time can be mitigated by a process called "re-fracturing" or "refracing". The concept of refracturing oil and gas wells is not new. It has been done since the 1970's in vertical wells and at the present time is being used to a limited degree in horizontal wells. The balance of protecting the oil and gas well while re-energizing it through refracturing is the focus of much activity in the oil and gas market.

To refac a well, one must isolate the old fractures because they act as pressure relief areas during the next fracturing process. The formation can be irreparably damaged by furthering the current fractures into non-productive rock strata or into formations that will collapse or allow an influx of formation water into the wellbore. This isolation can be accomplished by various means; either mechanically or chemically. Chemically, cementatious material may be placed strategically as to plug the desired areas. Disadvantageously, such products tend to "slump" out of the fractures in horizontal wellbores causing poor isolation. Epoxies have also been tried with limited success due to poor reaction control and high viscosity causing the coil tubing line to become clogged and eventually gelled solid. Mechanical means include temporary diverter plugs with dissolvable frac balls or internal expandable sleeves. Unfortunately, these approaches tend to be expensive and have low reliability.

Synthetic polymers, such as polyurethanes, have been proposed as a potential lost circulation material in the oil and gas market. However, as a lost circulation material, polyurethanes have been difficult to implement. For example, many polyurethane-forming compositions have an unacceptably short pot-life (which refers to the amount of time in which the combination of an active-hydrogen functional component, such as a polyol, and an isocyanate-functional component remains pumpable). As a result, complicated and cumbersome equipment options have been proposed to keep the reactive components separated during injection into the wellbore.

As an alternative, the use of blocked polyisocyanates to form a polyurethane lost circulation material has also been proposed. Blocked polyisocyanates, however, require removal of the blocking agent in order for the isocyanate groups to react with an active-hydrogen functional component. When a liquid system is contained under pressure, as is the case in a lost circulation material application, it is difficult, if not impossible, to remove the blocking agent. In addition, blocked polyisocyanate resins are usually very high in viscosity. As a result, they are very difficult to pump down the well without the use of solvents and plasticizers, which can be undesirable.

As a result, it would be desirable to provide improved methods and materials for treating a completed oil and gas well that has been depleted prior to refracturing using a diverting agent that overcomes at least some of the foregoing problems.

## SUMMARY OF THE INVENTION

In certain respects, the present invention is directed to methods of treating a completed oil and gas well that has been depleted prior to refracturing within an underground formation. These methods comprise: (a) preparing a polyurethane diverting agent by mixing a polyol-containing component and a polyisocyanate-containing component; and (b) introducing the diverting agent into the completed oil and gas well. In these methods (i) the polyol-containing component comprises a polymeric polyol having a viscosity at 25°C and at least 99% solids of no more than 1000 mPa•s and (ii) the isocyanate-containing component comprises an unblocked (cyclo)aliphatic polyisocyanate polymer having a viscosity at 25°C and at least 99% solids of no more than 1000 mPa•s and optionally comprising allophanate groups.

In other respects, the present invention is directed to methods of treating a completed oil and gas well that has been depleted prior to refracturing within an underground formation that comprise: (a) preparing a polyurethane diverting agent by mixing a polyol-containing component and a polyisocyanate-containing component; and (b) introducing the polyurethane diverting agent into the well. In these methods (i) the polyol-containing component comprises a polypropylene-oxide triol having a hydroxyl number of 350 to 390 mg KOH/gram, a water content of less than 0.05% by weight,

based on the total weight of the polymeric polyol, and a viscosity at 25°C and at least 99% solids of 520 to 700 mPa•s, and (ii) the isocyanate-containing component comprises an unblocked (cyclo)aliphatic polyisocyanate polymer, wherein the polymer comprises a trimerized reaction product hexamethylene diisocyanate, wherein the polymer has (1) an isocyanate content of 10 to 47% by weight, (2) a viscosity at 25°C and at least 99% solids of 50 to 800 mPa•s, and (3) a monomeric isocyanate content of less than 0.5 percent by weight, and wherein the polymer optionally comprises allophanate groups.

In still other respects, the present invention is directed to a polyurethane diverting agent comprising a mixture of a polyol-containing component and a polyisocyanate-containing component, wherein (i) the polyol-containing component comprises a polymeric polyol having a viscosity at 25°C and at least 99% solids of no more than 1000 mPa•s, and (ii) the polyisocyanate-containing component comprises an unblocked (cyclo)aliphatic polyisocyanate polymer, optionally comprising allophanate groups, having a viscosity at 25°C of no more than 1000 mPa•s and at least 99% solids content.

In still yet other respects, the present invention is directed to a method of hydraulically refracturing a partially depleted underground geologic formation comprising: (a) preparing a polyurethane diverting agent by surface mixing a polyol-containing component and a polyisocyanate-containing component; (b) introducing the polyurethane diverting agent into the formation; and (c) forcing the polyurethane diverting agent into pores of the formation under sufficient pressure and for a sufficient time such that the polyol-containing component and the polyisocyanate-containing component react to form a solid polyurethane reaction product that seals the existing perforations and associated fractures of the formation, wherein (i) the polyol-containing component comprises a polymeric polyol having a viscosity at 25°C of no more than 1000 mPa•s and at least 99% solids content, and (ii) the polyisocyanate-containing component comprises an unblocked (cyclo)aliphatic polyisocyanate polymer comprising allophanate groups and having a viscosity at 25°C of no more than 1000 mPa•s and at least 99% solids content; and (d) forcing a slurry comprising a plurality of proppant particles suspended in a carrier fluid into the formation under sufficient pressure and for a sufficient time such that new fissures and cracks are formed in the formation.

In some respects, the present invention is directed to an oil and gas well containing a polyurethane diverting agent comprising a polyol-containing component and a polyisocyanate-containing component, wherein (i) the polyol-containing component comprises a polymeric polyol having a viscosity at 25°C of no more than 1000 mPa•s and at least 99% solids content, and (ii) the polyisocyanate-containing component comprises an unblocked (cyclo)aliphatic polyisocyanate polymer comprising allophanate groups and having a viscosity at 25°C of no more than 1000 mPa•s and at least 99% solids content, and wherein the oil and gas well is complete and partially depleted.

## BRIEF DESCRIPTION OF THE FIGURE

The present invention will now be described for purposes of illustration and not limitation in conjunction with the figure, wherein:

FIG. illustrates one embodiment of the process of the present invention for delivering the diverting agent to the underground formation.

## DETAILED DESCRIPTION OF THE INVENTION

Various embodiments are described and illustrated in this specification to provide an overall understanding of the structure, function, operation, use, and manufacture of the disclosed invention(s). The various embodiments described and illustrated herein are non-limiting and non-exhaustive. Thus, the invention is not limited by the description of the various non-limiting and non-exhaustive embodiments disclosed herein. Rather, the invention is defined solely by the claims. The features and characteristics illustrated and/or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112 and 35 U.S.C. § 132(a). The various embodiments disclosed and described in this specification can comprise, consist of, or consist essentially of the features and characteristics as variously described herein.

Any patent, publication, or other material identified herein is incorporated herein by reference in its entirety unless otherwise indicated, but only to the extent that the incorporated material does not conflict with existing definitions, statements, or other disclosure material expressly set forth herein. As such, and to the extent necessary, the express disclosure as set forth herein supersedes any conflicting material incorporated by reference. Any material, or portion thereof, that is said to be incorporated by reference herein, but which conflicts with a definition, statement, or other disclosure material set forth herein, is only incorporated to the extent that no conflict arises between the incorporated

material and the present disclosure. Applicant reserves the right to amend this specification to expressly recite any subject matter, or portion thereof, incorporated by reference herein.

Reference throughout this specification to "certain embodiments", "some embodiments", "various non-limiting embodiments," or the like, means that a particular feature or characteristic may be included in an embodiment. Thus, use of such phrases, and similar phrases, in this specification does not necessarily refer to a common embodiment, and may refer to different embodiments. Further, the particular features or characteristics may be combined in any suitable manner in one or more embodiments. Thus, the particular features or characteristics illustrated or described in connection with various embodiments may be combined, in whole or in part, with the features or characteristics of one or more other embodiments without limitation. Such modifications and variations are intended to be included within the scope of the present specification. In this manner, the various embodiments described in this specification are non-limiting and non-exhaustive.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited herein includes all sub-ranges subsumed within the recited range. For example, a range of "1 to 10" is intended to include all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "a", "an", and "the", as used herein, each include "at least one" or "one or more", unless otherwise indicated, even if "at least one" or "one or more" is used in certain instances. Thus, these articles are used herein to refer to one or more than one (*i.e.,* to "at least one") of the grammatical objects of the article. By way of example only, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As used herein, the term "polymer" encompasses prepolymers, oligomers and both homopolymers and copolymers; the prefix "poly" in this context referring to two or more, and the term "molecular weight", when used in reference to a polymer, refers to the number average molecular weight, unless otherwise stated.

Certain embodiments of the present invention are directed to methods of treating a completed oil and gas well that has been depleted prior to refracturing. In some embodiments, these methods comprise: (a) preparing a polyurethane diverting agent by mixing a polyol-containing component and a polyisocyanate-containing component; and (b) introducing the polyurethane diverting agent into the well.

"Completed" or "completion" or "complete" means the process of making a well ready for production (or injection) and includes strengthening the well hole with casing, evaluating the pressure and temperature of the formation, and installing proper equipment to ensure an efficient flow of oil and gas out of the well.

"Refracturing" or "refracing" means hydraulically fracturing or fracing or fracking an already partially depleted well. Hydraulic fracturing means the process of creating fractures in rocks and rock formations by injecting specialized fluid into cracks to force them to open further. These larger fissures allow more oil and gas to flow out of the formations and into the wellbore, from where they can be easily extracted.

In some embodiments, these methods comprise (a) preparing a polyurethane diverting agent by surface mixing a polyol-containing component and a polyisocyanate-containing component; (b) introducing the polyurethane diverting agent into the well, such as by pumping; and (c) forcing the polyurethane diverting agent into the current perforations and associated fractures of the well under sufficient pressure and for a sufficient time such that the polyol-containing component and the polyisocyanate-containing component react to form a solid polyurethane reaction product that seals the current perforations and associated fractures

In certain embodiments, the polyurethane diverting agent is prepared by mixing the polyol-containing component and the polyisocyanate-containing component above ground, *i.e*., surface mixing (such as by using an agitator mixer, paddle mixer, screw mixer, vibration mixer, static mixer, vertical turbine mixer, planetary mixer, ultrasonic mixer, BANBURY mixer, or a conical mixer), prior to introducing the resulting mixture, *i.e*., polyurethane diverting agent, into the well.

As used herein, "polyurethane" encompasses polyurethanes that also include urea linkages, such polyurethanes

sometimes being referred to in the art as polyurethane-ureas. As used herein, "solid" means an impervious, non-porous block of material of stable shape and volume.

The polyurethane diverting agent used in the methods of the present invention comprise a polyol-containing component comprises a polymeric polyol having a viscosity at 25°C of no more than 1000 mPa•s and at least 99% solids content. In certain embodiments, the polymeric polyol has a viscosity at 25°C of no more than 850 mPa•s, no more than 750 mPa•s or, in some cases, no more than 700 mPa•s and at least 99% solids content. The viscosity values identified herein for the polymeric polyol and unblocked (cyclo)aliphatic polyisocyanate polymer are determined according to ASTM D2196 (2010).

In various embodiments, the polymeric polyol has a water content of less than 0.1% by weight, such as less than 0.05% by weight, based on the total weight of the polymeric polyol. In certain embodiments, the polymeric polyol has a hydroxyl number of from 200 to 800 mg KOH/gram, such as 300 to 500 mg KOH/gram, or, in some cases, 350 to 390 mg KOH/gram. In certain embodiments of the present invention, the polymeric polyol comprises a polypropylene-oxide triol having a hydroxyl number of 350 to 390 mg KOH/gram, a water content of less than 0.05% by weight, based on the total weight of the polymeric polyol, and a viscosity at 25°C of 520 to 700 mPa•s and at least 99% solids content.

As used herein, "hydroxyl number" is the number of milligrams of potassium hydroxide required for the complete hydrolysis of the fully phthalylated derivative prepared from 1 gram of polyol. Hydroxyl number is defined by the equation:

$$OH = (56100/EW) = 56100*(F/MW),$$

wherein OH represents the hydroxyl number of the polyol, EW is the weight per molar equivalents of contained OH groups, F represents the nominal functionality of the polyol, *i.e.*, the average number of active hydrogen groups on the initiator or initiator blend used in producing the polyol, and MW represents the nominal number average molecular weight based on the measured hydroxyl number and the nominal functionality of the polyol.

In some embodiments, the polyol-containing component is substantially or, in some cases, completely free, of any active-hydrogen containing materials other than the foregoing polymeric polyol(s). As used herein, "substantially free", when used with reference to active-hydrogen containing materials, means that such an active-hydrogen containing materials are present in the polyol-containing component in an amount of no more than 10 percent by weight, such as no more than five percent by weight, or, in some cases, no more than one percent by weight, based on the weight of the polymeric polyol having a viscosity at 25°C of no more than 1000 mPa•s and at least 99% solids content that is present in the polyol-containing component. "Active-hydrogen containing materials" refers to those compounds containing Zerevitinov active-hydrogen, as described below.

Suitable polymeric polyols for use in the methods of the present invention include, without limitation, polyester polyols, polyether polyols, polythioether polyols, polyacetal polyols, and polycarbonate polyols.

Suitable polyester polyols can be prepared, for example, from alcohols, such as di- and tri-hydric alcohols, and polycarboxylic acids, such as dicarboxylic acids and an anhydride thereof. The polycarboxylic acids may be aliphatic, cycloaliphatic, aromatic and heterocyclic and may be substituted, such as by halogen atoms, and unsaturated. Examples of appropriate acids/anhydrides include, but are not limited to, succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric and trimeric fatty acids such as oleic acid which may be mixed with monomeric fatty acids, dimethyl terephthalate and terephthalic acid-bis-glycol esters. Examples of suitable alcohols include, but are not limited to, ethylene glycol, 1,2- and 1,3-propylene glycol, 1,4- and 2,3-butylene glycol, 1,6-hexane diol, 1,8-octanediol, neopentylglycol, cyclohexanedimethanol 1,4-bis-hydroxy-methylcyclohexane, 2-methyl-1,3-propanediol, glycerol, trimethylolpropane, 1,2,6-hexanetriol, trimethylolethane, pentaerythritol, quinitol, mannitol and sorbitol, methyl glycoside, diethylene glycol, triethylene glycol, tetraethylene glycol, polyethylene glycols, dipropylene glycol, polypropylene glycols, dibutylene glycol and polybutylene glycols. Polyesters of lactones such as ε-caprolactone or hydroxycarboxylic acids such as Ω-hydroxycaproic acid may also be used.

Suitable polyether polyols include, for example, those having from one to four hydroxyl groups, such as three hydroxyl groups. Such polyether polyols can be prepared, for example, by the polymerization of epoxides, such as ethylene oxide, propylene oxide, butylene oxide, tetrahydrofuran, styrene oxide or epichlorohydrin, either each on its own, such as in the presence of boron trifluoride, or by addition of these epoxides, either as mixtures or successively, to starting components having reactive hydrogen atoms. Suitable starting components include water, alcohols and phenols, such as ethylene glycol, 1,3- and 1,2-propylene glycol, trimethylolpropane and 4,4'-dihydroxydiphenylpropane. In certain embodiments, the polyol-containing component comprises a polyether triol, such as a polyaddition product of ethylene oxide, propylene oxide, tetrahydrofuran, butylene oxide and epichlorohydrin, a co-addition and/or graft product thereof, and/or a polyether triol obtained by condensation of one or more trihydric alcohols and one or more polyether triols obtained by alkoxylation of trihydric alcohols, amines and aminoalcohols. In certain embodiments, the polymeric

polyol comprises a polyalkoxylated triol, such as a polypropylene oxide-based triol. In certain embodiments, the polyurethane diverting agent comprises a polyether polyol that is not derived from an amino-functional compound.

Suitable polythioether polyols include, for example, condensation products obtained by reacting thiodiglycol alone and/or with other glycols, dicarboxylic acids or formaldehyde, such products being polythio mixed ethers, polythioether esters or polythioether polyacetals.

Suitable polyacetal polyols include, for example, those which can be prepared from glycols such as diethylene glycol, triethylene glycol, 4,4'-dioxethoxydiphenyl dimethylmethane, hexanediol and formaldehyde. Suitable polyacetals may also be prepared by the polymerization of cyclic acetals.

Suitable polycarbonate polyols include, for example, those which can be prepared by the reaction of diols such as 1,3-propanediol, 1,4-butanediol, 1,6-hexanediol, diethylene glycol, triethylene glycol and/or tetraethylene glycol with a diarylcarbonate, such as with diphenylcarbonate or phosgene.

Polymeric polyols suitable for use in the present invention are commercially available and include, but are not limited to, those commercially available from Covestro LLC under the names MULTRANOL 4011, MULTRANOL 4012, MULTRANOL 4035, MULTRANOL 9158, MULTRANOL 9198, ARCOL PPG425, ARCOL 700, and ARCOL LHT 240.

If desired, the polyol-containing component may include a material, such as water, that forms a gas upon reaction with the isocyanate-containing component so as to form a foamed polymer.

In various embodiments, in addition to the polymeric polyol described above, the polyol-containing component may comprise additional active-hydrogen containing compounds, such as, for example, amino-functional compounds. For example, in certain embodiments, the polyol-containing component further comprises a polyaspartic ester corresponding to the formula (I):

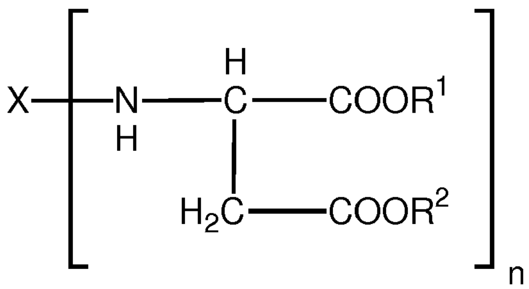

(I)

wherein: X is an aliphatic residue, $R^1$ and $R^2$ are organic groups that are inert to isocyanate groups at a temperature of 100°C or less and may be the same or different organic groups, and n is an integer of at least 2, such as 2 to 6 or 2 to 4.

In certain embodiments, X in formula (I) is a straight or branched alkyl and/or cycloalkyl residue of an n-valent polyamine that is reacted with a dialkylmaleate in a Michael addition reaction to produce a polyaspartic ester. For example, X may be an aliphatic residue from an n-valent polyamine, such as, for example, ethylene diamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-amino-methylcyclohexane, 2,4'- and/or 4,4'-diaminodicyclohexylmethane, 3,3'-dimethyl-4,4'-diaminodicyclohexylmethane, 2,4,4'-triamino-5-methyldicyclohexylmethane, polyether polyamines with aliphatically bound primary amino groups and having a number average molecular weight of 148 to 6000 g/mol, isomers of any thereof, and combinations of any thereof.

In some embodiments, X is obtained from 1,4-diaminobutane, 1,6-diaminohexane, 2,2,4- and/or 2,4,4-trimethyl-1,6-diaminohexane, 1-amino-3,3,5-trimethyl-5-aminomethylcyclohexane, 4,4'-diaminodicyclohexylmethane, 3,3'-dimethyl-4,4'-diaminodicyclohexylmethane, and/or 1,5-diamine-2-methyl-pentane.

As used herein, "inert to isocyanate groups" (as used to define $R_1$ and $R_2$ in formula (I)) means that these groups do not have Zerevitinov-active hydrogens as defined in Rompp's Chemical Dictionary (Rompp Chemie Lexikon), 10th ed., Georg Thieme Verlag Stuttgart, 1996. Generally, groups with Zerevitinov-active hydrogen are understood in the art to mean hydroxyl (OH), amino ($NH_x$), and thiol (SH) groups. In some embodiments, $R_1$ and $R_2$, independently of one another, are $C_1$ to $C_{10}$ alkyl residues, such as, for example, methyl, ethyl, or butyl residues.

In certain embodiments, n in formula (I) is an integer having a value of from 2 to 6, such as from 2 to 4, and in some embodiments, n is 2.

The polyaspartic ester may be produced by reacting a primary polyamine of the formula (II):

$X[NH_2]_n$ (II) with maleic or fumaric acid esters of the formula (III):

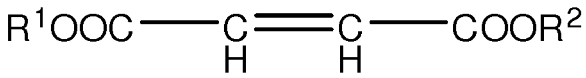

(III),

wherein X, n, $R^1$ and $R^2$ are as described earlier with respect to formula (I).

Examples of suitable polyamines include the above-mentioned diamines. Examples of suitable maleic or fumaric acid esters include dimethyl maleate, diethyl maleate, dibutyl maleate, and the corresponding fumarates.

The production of the polyaspartic ester from the polyamine and maleic/fumaric acid ester starting materials may take place at, for example, a temperature of 0°C to 100°C. The starting materials may be used in amounts such that there is at least one equivalent, and in some embodiments approximately one equivalent, of olefinic double bonds in the maleic/fumaric acid esters for each equivalent of primary amino groups in the polyamine. Any starting materials used in excess may be separated off by distillation following the reaction. The reaction may take place in the presence or absence of suitable solvents, such as methanol, ethanol, propanol, dioxane, or combinations of any thereof.

In various embodiments, the polyaspartic ester is a reaction product of two equivalents of diethyl maleate with one equivalent of 3,3'-dimethyl-4,4'-diaminodicyclohexylmethane. Such a reaction product has the structure of formula (IV)

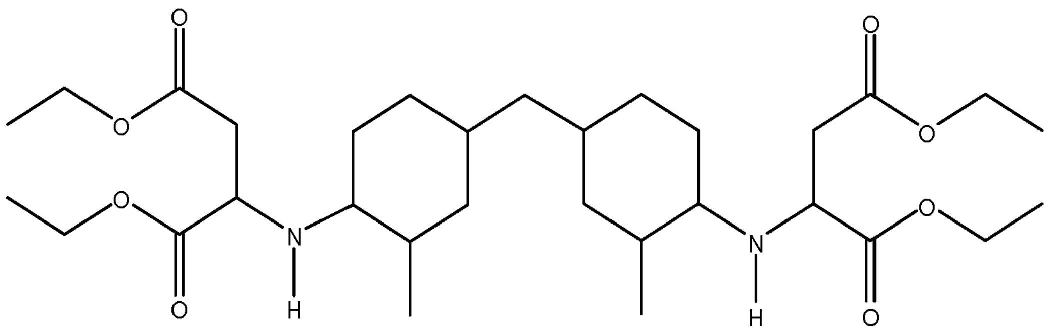

(IV)

Examples of suitable polyaspartic esters that may be used herein are also described in U.S. Patent Nos. 5,126,170; 5,236,741; 5,489,704; 5,243,012; 5,736,604; 6;458;293; 6,833,424; 7,169,876; and in U.S. Patent Publication No. 2006/0247371. In addition, suitable polyaspartic esters are commercially available from Covestro LLC and include, for example, DESMOPHEN NH 1520 and DESMOPHEN NH 1521.

In certain embodiments, where used, the polyaspartic ester is present in the polyol-containing component in an amount, such that the weight ratio of polyaspartic ester to polymeric polyol in the polyol-containing component is 0.01 to 0.85:1, such as 0.5:1 to 0.85:1.

As indicated earlier, the polyurethane diverting agent used in the methods of the present invention comprise an isocyanate-containing component comprising an unblocked (cyclo)aliphatic polyisocyanate polymer comprising allophanate groups and having a viscosity at 25°C of no more than 1000 mPa•s and at least 99% solids content. In some embodiments of the present invention, the isocyanate-containing component is substantially or, in some cases, completely free, of any isocyanate functional materials other than the foregoing unblocked (cyclo)aliphatic polyisocyanate polymer. As used herein, "substantially free", when used with reference to isocyanate functional materials, means that such an isocyanate functional material is present in the isocyanate-containing component in an amount of no more than 10 percent by weight, such as no more than five percent by weight, or, in some cases, no more than one percent by weight, based on the weight of the unblocked (cyclo)aliphatic polyisocyanate polymer present in the isocyanate-functional component.

As used herein, "polyisocyanate" refers to an organic compound having at least two isocyanate groups per molecule, such as three or more isocyanate groups in a molecule. As used herein, "unblocked" when used with reference to a polyisocyanate, means that the polyisocyanate has at least two, such as at least three, free isocyanate groups in a molecule. It will be appreciated that a free isocyanate group is distinct from a blocked isocyanate group.

A blocked isocyanate group is an isocyanate group that is internally blocked (as in uretdione-bond containing isocyanates) or externally blocked (such as those resulting from the reaction of free isocyanate groups with a blocking agent, such as, for example, a monohydric alcohol, an oxime, a lactam, a phenol, an amine, an azole, and/or a dialkyl malonate) such that the resulting blocked isocyanate group is not reactive with an active-hydrogen group until the blocking group is eliminated, for example, at an elevated temperature.

A free isocyanate group, on the other hand, is reactive with an active-hydrogen group at non-elevated temperatures, such as 30°C or less. In certain embodiments, the unblocked (cyclo)aliphatic polyisocyanate polymer comprising

allophanate groups that is used in the polyurethane diverting agent used in the methods of the present invention is substantially free of blocked isocyanate groups, which, as used herein, means that any blocked isocyanate groups, if present at all, are not present in the unblocked polyisocyanate in any amount sufficient to prevent reaction of the polyisocyanate polymer with a polyol to an extent sufficient to provide a solid, impervious polyurethane if the polyisocyanate polymer and the polyol were to be mixed and maintained at a non-elevated temperature, such as 30°C or less.

As used herein, "(cyclo)aliphatic polyisocyanate polymer groups" refers to polyisocyanate polymers containing aliphatically and/or cycloaliphatically bound isocyanate groups.

The unblocked (cyclo)aliphatic polyisocyanate polymer used in the polyurethane diverting agent of the methods of the present invention can be derived from a starting material corresponding to the formula (V):

$$R(NCO)_x, \qquad (V)$$

in which R represents an aliphatic hydrocarbon group with from 2 to 20, such as 6 to 10, carbon atoms, a cycloaliphatic hydrocarbon group having from 4 to 20, such as 6 to 15, carbon atoms, or a xylylene group and x represents a number of from 2 to 4, such as 2.

Specific examples of such isocyanates include, but are not limited to, ethylene diisocyanate, tetramethylene diisocyanate, hexamethylene diisocyanate ("HDI"), undecamethylene diisocyanate, 2,4,4-trimethyl-1,6-diisocyanatohexane, isocyanatomethyl-3,5,5-trimethyl-cyclohexylisocyanate, 1,3-diisocyanatocyclobutane, 1,4-diisocyanatocyclohexane, 4,4'-diisocyanato-dicyclohexylmethane, 1,2-bis(isocyanatomethyl)cyclobutane, trimethylhexane-1,6-disocyanate, 1,11-diisocyanato-undecane, 3-isocyanatomethyl-3,5,5-trimethylcyclohexyl isocyanate, 4,4'-cyclohexane diisocyanate, 4,4'-dicyclohexylmethane-diisocyanate, 1,2-bis-(isocyanatomethyl)-cyclobutane, bis-isocyanatomethyl-norbornane (isomeric mixture), 3(4), 8(9)-diisocyanatomethyl-tricyclo(5,2,1,2,6)-decane, p-xylylene diisocyanate, 1,12-dodecane diisocyanate, lysine diisocyanate ($C_1$ to $C_8$ -alkyl esters), 1,3-diisocyanatocyclo-hexane, 1-isocyanato-3,3,5-trimethyl-5-isocyanato methyl cyclohexane (isophorone diisocyanate or IPDI) and PDI (pentane diisocyanate - bio-based).

In certain embodiments, the isocyanate consists essentially of HDI, which, as used herein, means that at least 90 percent by weight, at least 95 percent by weight, at least 99 percent by weight or, in some cases, 100 percent by weight, based on the total weight of isocyanate used to make the unblocked (cyclo)aliphatic polyisocyanate polymer that is used in the polyurethane diverting agent used in the methods of the present invention, is HDI.

The foregoing isocyanates may be used directly or they may be preliminarily reacted with a hydroxyl compound to form urethane-containing isocyanates. Up to 100% of the hydroxyl groups of the hydroxyl compound may be prereacted with a portion of the isocyanate groups present in the isocyanate to form urethane groups prior to the allophanate-forming reaction.

Higher than difunctional (cyclo)aliphatic polyisocyanates may also be used. Examples of such polyisocyanates include the trimerization products of HDI and trimerization products of 3-isocyanatomethyl-3,5,5-trimethyl cyclohexylisocyanate which contains isocyanurate groups.

Mixtures of any of the above-identified isocyanates may be used.

Hydroxyl compounds useful as starting materials include any organic compound containing at least one hydroxyl group in which no other groups that are reactive with isocyanate groups are present. Such compounds include those with alcoholic hydroxyl groups and/or phenolic hydroxyl groups.

Examples of the types of compounds containing alcoholic hydroxyl groups that are suitable for use in preparing the unblocked (cyclo)aliphatic polyisocyanate polymer that is used in the polyurethane diverting agents used in the methods of the present invention include: low number average molecular weight monohydric to tetrahydric aliphatic alcohols having a number average molecular weight of from 32 to 250 which may contain ether bridges; cycloaliphatic monovalent to tetravalent alcohols with number average molecular weights of from 88 to 250; araliphatic monohydric to tetrahydric alcohols with number average molecular weights of from 103 to 300; and polythioethers, polyacetals, polycarbonates, polyesters and polyethers having a number average molecular weight of from 250 to 5000, such as 300 to 2000.

Specific examples of suitable compounds containing alcoholic hydroxyl groups include, but are not limited to, methanol, ethanol, propanol, isopropanol, isomeric butanols, allyl alcohol, pentanols, hexanols, heptanols, 2-ethylhexanol, fatty alcohols having 10 to 20 carbon atoms, ethanediol, 1,2- and 1,3-propane diol, 1,2- and 1,3-butanediol, 1,4- and 1,5-pentanediol, neopentyl glycol, 1,6- and 2,5-hexane diol, 3-methylpentane-diol-1,5, 2-methyl-2-propylpropanediol-1,3, 2,2-diethyl-propanediol-1,3, 2-ethylhexanediol-1,3, 2,2,4-trimethylpentanediol-1,3, trimethylhexane-diol-1,6, decanediol-1,10, dodecanediol-1,2, 2-butanediol-1,4, 2-methylene-propanediol-1,3, glycerol, butanetriol, 2-hydroxymethyl-2-methylpropane diol-1,3, 1,2,6-hexanetriol, trimethylolethane, trimethylolpropane, pentaerythritol, ethyleneglycol monoalkyl- or monoaryl-ether, propyleneglycol monoalkyl ether, diethyleneglycol, triethyleneglycol, tetraethyleneglycol, cyclopentanol, cyclohexanol, methylcyclohexanol, trimethylcyclohexanol, 4-tertiarybutylcyclohexanol, menthol, borneol, isoborneol, 2-hydroxydecaline, 1,2-, 1,3-, and 1,4-cyclohexanediol, 2,4-dihydroxy-1,1,3,3-tetramethylcyclobutane, 1,4-bishydroxymethyl-cyclohexane, bis-(4-hydroxycyclohexyl)methane, 2,2-bis-(4-hydroxycyclohexyl)-propane, 2-methyl-2,4-bis-(4-hydroxycyclohexyl)-pentane, furfuryl- and tetrahydrofurfuryl-alcohol, bis-hydroxymethyl-norbornane, dihydroxymethyl-tricyclododecane, benzyl alcohol, phenylethyl alcohol, 3-phenylpropanol,and 4,4'-di-(2-hydroxyethyl)-diphenylmethane.

Suitable polythioethers, polyacetals, polycarbonates, polyesters and polyethers with hydroxyl groups include those described above.

Mixtures of the hydroxyl compounds mentioned above may be used. As will be appreciated, by using a mixture of hydroxyl compounds differing in their functionality, the functionality of the polyisocyanate obtained may be adjusted.

In embodiments, any hydroxyl compound employed in preparing the unblocked (cyclo)aliphatic polyisocyanate polymer that is used in the polyurethane diverting agents used in the methods of the present invention is free of any base which may have been present during its preparation.

In certain embodiments, no other additives such as catalysts or acids are used to prepare the unblocked (cyclo)aliphatic polyisocyanate polymer. However, if an isocyanate is preliminarily converted to a urethane-containing material, it may be desirable to include a urethane catalyst in the mixture of isocyanate and hydroxyl group-containing material until the desired degree of urethane formation has been reached. The catalysts may then be removed from the reaction mixture prior to allophanate formation but such removal is not required.

When preparing the unblocked (cyclo)aliphatic polyisocyanate polymer, the reactants are, in certain embodiments, used in quantities such that from 3 to 20, such as 8 to 15, equivalents of NCO groups are present for each equivalent of hydroxyl groups. If a compound containing urethane groups is preliminarily formed from the isocyanate, an appropriate excess of isocyanate component is used.

The reaction to form the unblocked (cyclo)aliphatic polyisocyanate polymer is often carried out at a temperature of, for example, ≥150°C, such as ≥200°C or ≥250°C, and/or for a period of from, for example, 15 seconds to 1.5 hours, such as 15 seconds to 30 minutes or 1 to 15 minutes. An allophanate-forming reaction may be carried out in the absence of oxygen to provide a low color product. In certain embodiments, the allophanatization takes place by reaction of an isocyanate-functional polyurethane with a polyisocyanate, with the addition of a suitable catalyst for the allophanatization. This may be followed by the addition, for the purpose of stabilization, of an acidic additive and the removal from the product of excess polyisocyanate, by means for example of thin-film distillation or extraction.

Examples of suitable catalysts for the allophanatization are zinc, tin, potassium , and zirconium compounds, such as Sn(II) salts, including the Sn(II) dihalides, tin or zinc soaps, such as Sn(II) bis(2-ethylhexanoate), Sn(II) bis(n-octoate), Zn(II) bis(2-ethylhexanoate) and Zn(II) bis(n-octoate), and also organotin compounds. The allophanatization catalyst is often used in an amount of up to 5% by weight, based on the overall reaction mixture, such as 5 to 500 ppm of the catalyst, or, in some cases, from 20 to 200 ppm.

Acidic additives can be Lewis acids (electron deficiency compounds) or Bronsted acids (protic acids) or compounds which react with water to release such acids. These may, for example, be organic or inorganic acids or else neutral compounds such as acid halides or esters which react with water to form the corresponding acids. Specific examples include, but are not limited to, hydrochloric acid, phosphoric acid, phosphoric esters, benzoyl chloride, isophthaloyl dichloride, p-toluenesulphonic acid, formic acid, acetic acid, dichloroacetic acid and 2-chloropropionic acid.

In embodiments, where the allophanate-forming reaction is completed, the reaction mixture is cooled to a temperature below 100°C, such as less than 70°C, or, in some cases, to 25°C. This cooling is often carried out in a period of no more than 10 minutes, such as less than five minutes.

In certain embodiments, to prepare the unblocked (cyclo)aliphatic polyisocyanate polymer, the isocyanate starting material (such as a diisocyanate, such as HDI) is introduced into the reaction vessel and the hydroxyl compound, which may be at a temperature of at least 25°C, is added thereto. Appropriate reaction vessels are known in the art.

If the same isocyanate is to be converted to a urethane containing isocyanate before being converted to an allophanate, it may be desirable to introduce excess isocyanate from the start. In such cases, the isocyanate may be used in a quantity such that the NCO/OH ratio is in the range of from 3:1 to 12:1.

In preparing the unblocked (cyclo)aliphatic polyisocyanate polymer, the nature and relative amounts of the starting materials may optionally be chosen to obtain allophanates containing at least two isocyanate groups.

As will be appreciated, therefore, the unblocked (cyclo)aliphatic polyisocyanate polymer used in some embodiments of the polyurethane diverting agent used in the methods of the present invention comprises a trimerized reaction product of HDI using, for example, a metal catalyst, such as a tin or potassium catalyst, such as tin octoate or potassium octoate.

In some embodiments, the unblocked (cyclo)aliphatic polyisocyanate polymer that is used in a method of the present invention has one or more of the following properties: (1) an isocyanate content of 10 to 47 weight percent, such as 10 to 24 weight percent or 18 to 20 weight percent, (2) a viscosity at 25°C of no more than 1000 mPa•s, such as 50 to 900 mPa•s, 100 to 900 mPa•s, 200 to 800 mPa•s or 300 to 600 mPa•s and at least 99% solids content, (3) a monomeric isocyanate content of less than 3 percent by weight, such as less than 1 percent by weight, less than 0.5 percent by weight, or no more than 0.3 percent by weight; and (4) a color value (HAZEN) according to DIN 53,409 below 100, such as no more than 80.

Unblocked (cyclo)aliphatic polyisocyanate polymers suitable for use in the present invention include, for example, those described in U.S. Pat. Nos. 4,810,820; 5,124,427; 5,208,334; and 5,444,146. A specific example of an unblocked (cyclo)aliphatic polyisocyanate polymer suitable for use in polyurethane diverting agent useful in methods of the present invention is DESMODUR XP 2580, from Covestro LLC.

In certain embodiments, in forming the polyurethane diverting agent useful in the methods of the present invention, the polyol-containing component and the isocyanate-containing components are combined in relative amount such that the polyurethane diverting agent has a ratio of isocyanate groups to active-hydrogen groups of 0.8 to 3.0:1, such as 0.8 to 2.0:1, or, in some cases, 1:1 to 1.5:1.

In various embodiments, at least one of the polyol-containing component and the isocyanate-containing component used to form the polyurethane diverting agent useful in the methods of the present invention comprises a urethane forming catalyst. Examples of such catalysts include, but are not limited to, tertiary amines and metal compounds. Some examples of suitable tertiary amine catalysts include, but are not limited to, triethylamine, tributylamine, N-methylmorpholine, N-ethylmorpholine, N,N,N',N'-tetra-methylethylene diamine, pentamethyl-diethylene triamine, and higher homologs, 1,4-diazabicyclo[2.2.2]octane, N-methyl-N'(dimethylaminoethyl) piperazine, bis(dimethylaminoalkyl)-piperazines, N,N-dimethylbenzylamine, N,N-dimethylcyclohexylamine, N,N-diethylbenzylamine, bis(N,N-diethyl-aminoethyl) adipate, N,N,N',N'-tetramethyl-1,3-butanediamine, N,N-dimethyl-β-phenylethylamine, 1,2-dimethylimidazole, 2-methylimidazole, monocyclic and bicyclic amidines, bis(dialkylamino)alkyl ethers, and tertiary amines containing amide groups (preferably formamide groups). The catalyst used may also be a Mannich base of secondary amines (such as dimethylamine) and aldehydes (preferably formaldehyde) or ketones (such as acetone) and phenols.

In some embodiments, the catalyst comprises an acid blocked amine, i.e., a delayed action amine catalyst. The blocking agent can be an organic carboxylic acid having 1 to 20 carbon atoms, such as 1 to 2 carbon atoms. Examples of blocking agents include 2-ethyl-hexanoic acid and formic acid. Such acid blocked amine catalysts are described in, for example, U.S. Pat. No. 6,013,690. Additional examples of suitable organic acid blocked amine catalysts which may be employed, are the acid blocked amines of triethylene-diamine, N-ethyl or methyl morpholine, N,N dimethylamine, N-ethyl or methyl morpholine, N,N dimethylaminoethyl morpholine, N-butyl-morpholine, N,N'dimethylpiperazine, bis(dimethylamino-alkyl)-piperazines, 1,2-dimethyl imidazole, dimethyl cyclohexylamine. Further examples include DABCO 8154 catalyst based on 1,4-diazabicyclo[2.2.2]octane,1,5-Diazabicyclo[4.3.0]non-5-ene, and DABCO BL-17 catalyst based on bis(N,N-dimethylaminoethyl) ether (available from Air Products and Chemicals, Inc., Allentown, Pa.) and POLYCAT SA-1, POLYCAT SA-102, and POLYCAT SA-610/50 catalysts based on POLYCAT DBU amine catalyst (available from Air Products and Chemicals, Inc.) as described in, for example, U.S. Pat. No. 5,973,099. Other acid blocked amine catalysts suitable for the present invention include those described in, for example U.S. Pat. Nos. 4,219,624, 5,112,878, 5,183,583, 5,789,533, 6,395,796, 6,432,864 and 6,525,107.

Other suitable catalysts include organic metal compounds, such as organic tin, bismuth, zinc, lithium, titanium, manganese germanium, cobalt, and/or zirconium compounds. Suitable organic tin compounds include those containing sulfur, such as dioctyl tin mercaptide, and tin(II) salts of carboxylic acids, such as tin(II) acetate, tin(II) octoate, tin(II) ethylhexoate, and tin(II) laurate, as well as tin(IV) compounds, such as dibutyltin dilaurate, dibutyltin dichloride, dibutyltin diacetate, dibutytin maleate, and dioctyltin diacetate. Suitable bismuth compounds include bismuth neodecanoate, bismuth versalate, and various bismuth carboxylates. Suitable zinc compounds include zinc neodecanoate and zinc versalate. Mixed metal salts containing more than one metal (such as carboxylic acid salts containing both zinc and bismuth) are also suitable catalysts.

In some embodiments, the catalyst comprises a delayed action or heat-activated tin catalyst such as, for example, dibutyltin dimercaptide, dibutyltin diisooctylmercaptoacetate, dimethyltin dimercaptide, dibutyltin dilaurylmercaptide, dimethyltin dilaurylmercaptide, dimethyltin dithioglycolate, dimethyltin diisooctylmercaptoacetate, di(n-butyl)tin bis(isooctylmercapto-acetate), and di(isooctyl)tin bis(isooctylmercaptoacetate), all of which are commercially available. The use of other delayed action organic metal catalysts, such as an iron pentanedione or a bismuth carboxylate, is also possible. The use of encapsulated metal catalysts, such as polymer encapsulated tin catalysts, is also suitable.

The quantity of catalyst can vary depending on the specific catalyst used. In some embodiments, the catalyst is used in an amount of up to 5 percent by weight, such as 0.001 to 3 percent by weight, or, in some cases, 0.001 to 2 percent by weight, based on the total weight of the polyurethane diverting agent. In fact, it has been surprisingly observed that the pot-life of certain compositions suitable for use in the methods of the present invention was actually extended by inclusion of certain organic acid blocked amine catalysts in the composition in an amount of 0.01 to 2, such as 0.1 to 1, percent by weight, based on the total weight of the polyurethane diverting agent, as compared to the same polyurethane diverting agent in which no such catalyst is included.

In certain embodiments, the polyol-containing component, the polyisocyanate-containing component and/or the polyurethane diverting agent is a substantially 100 percent resin solids component or composition, which means that the component or composition comprises less than 10 percent by weight, less than five percent by weight, less than two percent by weight or less than one percent by weight of components that do not react to form a polyurethane, based on the total weight of the component or composition. In certain embodiments, the polyol-containing component, the

polyisocyanate-containing component and/or the polyurethane diverting agent is substantially free of water, which means that water is present in the component or composition in an amount of less than 10 percent by weight, less than five percent by weight, less than two percent by weight or less than one percent by weight, based on the total weight of the component or composition. In some embodiments, the polyol-containing component, the polyisocyanate-containing component and/or the polyurethane diverting agent is substantially free of volatile organic compounds (VOC), which means that VOC is present in the component or composition in an amount of less than 10 percent by weight, less than five percent by weight, less than two percent by weight or less than one percent by weight, based on the total weight of the component or composition.

In various embodiments, the polyurethane diverting agent may comprise any of a variety of additional materials, such as rheology modifiers, defoamers, fillers (such as barium sulfate, quartz powder, silicic acid, calcium carbonate, chalk, dolomite or talcum), wetting agents (such as naphthalenesulphonic acid salts), stabilizers (such as sterically hindered phenol derivatives, amines, phosphites, xanthogene disulfides or thiuram disulfides), and surfactants (including ionic and nonionic surfactants).

The polyurethane diverting agents described herein, which involve the selection of a polyol-containing component comprising a particular polymeric polyol and an isocyanate-containing component comprising a particular unblocked (cyclo)aliphatic polyisocyanate polymer, optionally used in combination with a urethane-forming catalyst, such as a delayed action catalyst as described above, are currently believed to exhibit a surprising combination of properties that are believed to make the polyurethane diverting agent particularly suitable for use as a chemical diversion agent in oil and gas well applications.

More specifically, it has been observed that (i) because the polyol-containing component and the polyisocyanate-containing component are very compatible with each other, (i.e., there is little or no phase separation in the mixture of the two), there is essentially complete reactivity of the components, thus providing the ability to surface mix the components using relatively unsophisticated equipment and yet still provide a cured polymer with good physical properties, (ii) the mixture of the polyol-containing component and the polyisocyanate-containing component, particularly in combination with certain levels of delayed action amine catalyst, can provide extended pot-life, low viscosity and controlled reactivity at temperatures ranging from ambient up to 200°F (93.3°C), making the composition easily pumpable (i.e., less pressure, and therefore power, is necessary to deliver the composition into an application device in the well) after surface mixing, while still having the ability to cure to provide a cured polymer with good physical properties at the desired time and temperature range, and (iii) the foregoing believed advantages are believed to be accomplishable without the use of blocked isocyanates, solvents and/or plasticizers, each of which can be undesirable from a performance and environmental standpoint in a diversion agent application.

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

## EXAMPLES

The following materials were used in preparing the compositions of the Examples:

| | |
|---|---|
| ISOCYANATE A | an unblocked aliphatic polyisocyanate resin based on HDI containing allophanate groups and having a viscosity (at 25°C) of 200-500 cps, and 99.8 wt. % solids content, an isocyanate content of 19-21 %, an APHA color of ≤80, and a free HDI content of ≤0.5% based on solids, commercially available from Covestro LLC as DESMODUR XP 2580; |
| ISOCYANATE B | an unblocked aliphatic polyisocyanate resin based on HDI containing isocyanurate groups and having a viscosity (at 25°C) of 800-1400 cps and 100 wt. % solids content, an isocyanate content of 22-24%, a Hazen color of ≤40, and a free HDI content of ≤0.25% based on solids, commercially available from Covestro LLC as DESMODUR N 3600; |
| ISOCYANATE C | a biuret-modified aliphatic polyisocyanate resin based on HDI and having a viscosity (at 25°C) of 1300-2200 cps and 100 wt. % solids content, an isocyanate content of 22-24%, a Hazen color of ≤80, and a free HDI content of ≤0.7% based on solids, commercially available from Covestro LLC as DESMODUR N 3200; |
| ISOCYANATE D | an unblocked aliphatic polyisocyanate resin based on HDI containing allophanate groups and having a viscosity (at 25°C) of 200-500 cPs and 99.8 wt. % solids content, an isocyanate content of 19-21%, an APHA color of ≤80, and a free HDI content of ≤0.5% based on solids, commercially available from Covestro LLC as DESMODUR XP 2580; |

(continued)

| | |
|---|---|
| POLYOL A | a 160-molecular-weight polypropylene oxide-based triol having a hydroxyl number (mg KOH/g) of 1,035-1,065 and a viscosity (at 25°C) of 1,200-1,500 cps, and 100 wt. % solids content, commercially available from Covestro LLC as MULTRANOL 9133; |
| POLYOL B | a 450-molecular-weight polypropylene oxide-based triol having a hydroxyl number (mg KOH/g) of 350-390, a viscosity (at 25°C) of 520-700 cps and 100 wt. % solids content, commercially available from Covestro LLC as MULTRANOL 4012; |
| POLYOL C | a 300-molecular-weight polypropylene oxide-based triol having a hydroxyl number (mg KOH/g) of 530-570, a viscosity (at 25°C) of 1400-1900 cps and 100 wt. % solids content, commercially available from Covestro LLC as MULTRANOL 4011; |
| POLYOL D | a 450-molecular-weight polypropylene oxide-based triol having a hydroxyl number (mg KOH/g) of 350-390 and a viscosity (at 25°C) of 520-700 cps and 100 wt. % solids content, commercially available from Covestro LLC as MULTRANOL 4012; |
| CATALYST A | a bismuth neodecanoate urethane catalyst commercially available from Vertellus Specialties Inc.as COSCAT 83; and |
| CATALYST B | a delayed action amine gel catalyst containing cyclic amine/carboxylic acid salts commercially available from Momentive Performance Materials Inc. as NIAX A 575. |

Example 1

Mixtures of the polymeric polyols and polyisocyanates listed in Table I were prepared by pouring the designated polyol and isocyanate into a 2 oz. glass jar at a 50:50 ratio by weight. The mixtures were shaken by hand for 30 seconds and observed initially for solution quality such as clear, hazy, or the formation of micelles. Upon standing for 24 hours at ambient conditions another observation was made looking for solution clarity, haze or separation. This step was repeated after one week. The mixtures were considered miscible if the solution was initially clear and remained so even after one week. All other solution conditions were considered to be immiscible. Results are set forth in Table I.

**Table I**

| | ISOCYANATE A | ISOCYANATE B | ISOCYANATE C |
|---|---|---|---|
| POLYOL A | Immiscible | Immiscible | Immiscible |
| POLYOL B | Miscible | Immiscible | Miscible |
| POLYOL C | Miscible | Immiscible | Miscible |

Example 2

Compositions 2A through 2K were prepared by mixing the components in the amounts listed in Table II (amounts are in grams). The compositions were evaluated for gel time at the temperatures listed in Table II. Gel time was determined by using a GARDCO GT-SHP "Hot Pot" Gel Timer. 100 grams of the composition was poured into an aluminum cup and placed into the "hot pot" of the gel timer that had already been stable at the cure temperature. The gel timer had a motor that rotated a stirrer that was inserted in the composition. As gelation occurred, drag eventually exceeded torque and the motor stalled. The time at which the motor stalled was the reported gel time.

**Table II**

| | 2A | 2B | 2C | 2D | 2E | 2F | 2G | 2H | 2I | 2J | 2K |
|---|---|---|---|---|---|---|---|---|---|---|---|
| POLYOL D | 160.00 | 160.00 | 160.00 | 160.00 | 160.00 | 160.00 | 160.00 | 160.00 | 160.00 | 160.00 | 160.00 |
| CATALYST A | -- | -- | -- | -- | -- | 0.004 | 0.004 | 0.004 | | | |
| CATALYST B | -- | -- | -- | -- | -- | -- | | | 0.4 | 4.0 | 8.0 |
| ISOCYANATE D | 240.00 | 240.00 | 240.00 | 240.00 | 240.00 | 240.00 | 240.00 | 240.00 | 240.00 | 240.00 | 240.00 |
| **Results** | | | | | | | | | | | |
| Cure temperature °F (°C) | 150 (65.6) | 190 (87.8) | 200 (93.3) | 230 (110) | 360 (182) | 100 (37.8) | 150 (65.6) | 200 (93.3) | 200 (93.3) | 200 (93.3) | 200 (93.3) |
| Gel time (minutes) | 953 | 326 | 99 | 88 | 15 | 1410 | 221 | 33 | 288 | 146 | 78 |

The Figure illustrates one embodiment of the process of the present invention for delivering the polyurethane diverting agent to the underground formation. As shown in the Figure, the application device is inserted into the geologic formation having existing fractures. The device has inflatable seals at each end to maintain higher pressure in the area of the formation in which the polyurethane diverting agent is to be injected to seal existing fractures and a pressure relief tube running through it to equalize the pressure ahead of and behind the device inside the well casing. The device has injection nozzles for injecting the polyurethane diverting agent into the formation through perforation holes in the well casing. The pressure in the well casing is raised and forces the polyurethane diverting agent into the formation where it gels and seals the existing fractures.

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant(s) reserve the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:

1. A method of treating a partially depleted oil and gas well prior to refracturing, comprising: (a) preparing a polyurethane diverting agent by mixing a polyol-containing component and a polyisocyanate-containing component; and (b) introducing the polyurethane diverting agent into a well bore, wherein (i) the polyol-containing component comprises a polymeric polyol having a viscosity at 25°C of no more than 1000 mPa•s and at least 99% solids content, and (ii) the polyisocyanate-containing component comprises an unblocked (cyclo)aliphatic polyisocyanate polymer, optionally comprising allophanate groups, having a viscosity at 25°C of no more than 1000 mPa•s and at least 99% solids content.

2. The method according to clause 1, wherein (a) comprises surface mixing the polyol-containing component and a polyisocyanate-containing component.

3. The method according to clause 1, wherein the polymeric polyol comprises a polyalkoxylated triol.

4. The method according to clause 3, wherein the polyalkoxylated triol comprises a polypropylene-oxide triol.

5. The method according to clause 4, wherein the polypropylene-oxide triol has a hydroxyl number of 350 to 390 mg KOH/gram, a water content of less than 0.05% by weight, based on the total weight of the polymeric polyol, and a viscosity at 25°C of 520 to 700 mPa•s and at least 99% solids content.

6. The method according to one of clauses 1 to 5, wherein the unblocked (cyclo)aliphatic polyisocyanate polymer is derived from an isocyanate starting material comprising hexamethylene diisocyanate.

7. The method according to clause 6, wherein the isocyanate starting material consists essentially of hexamethylene diisocyanate.

8. The method according to clause 7, wherein the unblocked (cyclo)aliphatic polyisocyanate polymer comprises a trimerized reaction product hexamethylene diisocyanate.

9. The method according to one of clauses 1 to 8, wherein the unblocked (cyclo)aliphatic polyisocyanate polymer has an isocyanate content of 10 to 24 weight percent, (2) a viscosity at 25°C of 50 to 900 mPa•s, (3) a monomeric isocyanate content of less than 1 percent by weight, and (4) at least 99% solids content.

10. The method according to one of clauses 1 to 9, wherein at least one of the polyol-containing component and the polyisocyanate-containing component comprises a urethane forming catalyst comprising an acid blocked amine or an organic metal compound.

11. The method according to clause 10, wherein the catalyst is present in an amount of 0.01 to 2 percent by weight, based on the total weight of the polyurethane diverting agent.

12. The method according to one of clauses 1 to 11, wherein the polyol-containing component further comprises a polyaspartic ester.

13. A method of treating a complete oil and gas well that has been depleted prior to refracturing, comprising: (a) preparing a polyurethane diverting agent by mixing a polyol-containing component and a polyisocyanate-containing component; and (b) introducing the polyurethane diverting agent into the well, wherein (i) the polyol-containing component comprises a polypropylene-oxide triol having a hydroxyl number of 350 to 390 mg KOH/gram, a water content of less than 0.05% by weight, based on the total weight of the polymeric polyol, and a viscosity at 25°C of 520 to 700 mPa•s and at least 99% solids content, (ii) the isocyanate-containing component comprises an unblocked (cyclo)aliphatic polyisocyanate polymer, optionally comprising allophanate groups, wherein the polymer comprises a trimerized reaction product hexamethylene diisocyanate and wherein the polymer has (1) an isocyanate content of 10 to 47% by weight, (2) a viscosity at 25°C of no more than 50 to 900 mPa•s, (3) a monomeric isocyanate content of less than 0.5 percent by weight, and (4) at least 99% solids content.

14. The method according to clause 13, wherein (a) comprises surface mixing the polyol-containing component and a polyisocyanate-containing component.

15. The method according to one of clauses 13 and 14, wherein the unblocked (cyclo)aliphatic polyisocyanate polymer has an isocyanate content of 10 to 24 weight percent.

16. The method according to one of clause 13 to 15, wherein at least one of the polyol-containing component and the polyisocyanate-containing component comprises a urethane forming catalyst comprising an acid blocked amine and/or an organic metal compound.

17. The method according to clause 16, wherein the catalyst is present in an amount of 0.01 to 2 percent by weight, based on the total weight of the polyurethane diverting agent.

18. A method of treating a completed oil and gas well that has been partially depleted prior to refracturing within an underground formation, comprising: (a) preparing a polyurethane diverting agent by surface mixing a polyol-containing component and a polyisocyanate-containing component; (b) introducing the polyurethane diverting agent into the formation; and (c) forcing the polyurethane diverting agent into pores of the formation under sufficient pressure and for a sufficient time such that the polyol-containing component and the polyisocyanate-containing component react to form a solid polyurethane reaction product that seals the existing perforations and associated fractures of the formation, wherein (i) the polyol-containing component comprises a polymeric polyol having a viscosity at 25°C of no more than 1000 mPa•s and at least 99% solids content, and (ii) the polyisocyanate-containing component comprises an unblocked (cyclo)aliphatic polyisocyanate polymer, optionally comprising allophanate groups, and having a viscosity at 25°C of no more than 1000 mPa•s and at least 99% solids content.

19. The method according to clause 18, wherein the polymeric polyol comprises a polyalkoxylated triol.

20. The method according to clause 19, wherein the polyalkoxylated triol comprises a polypropylene-oxide triol.

21. The method according to clause 20, wherein the polypropylene-oxide triol has a hydroxyl number of 350 to 390 mg KOH/gram, a water content of less than 0.05% by weight, based on the total weight of the polymeric polyol, and a viscosity at 25°C of 520 to 700 mPa•s and at least 99% solids content.

22. The method according to one of clauses 18 to 21, wherein the unblocked (cyclo)aliphatic polyisocyanate polymer is derived from an isocyanate starting material comprising hexamethylene diisocyanate.

23. The method according to clause 22, wherein the isocyanate starting material consists essentially of hexamethylene diisocyanate.

24. The method according to clause 23, wherein the unblocked (cyclo)aliphatic polyisocyanate polymer comprises a trimerized reaction product hexamethylene diisocyanate.

25. The method according to clause 24, wherein the unblocked (cyclo)aliphatic polyisocyanate polymer has an isocyanate content of 10 to 24 weight percent, (2) a viscosity at 25°C of 50 to 900 mPa•s, (3) a monomeric isocyanate content of less than 1 percent by weight, and (4) at least 99% solids content.

26. The method according to one of clauses 18 to 25, wherein at least one of the polyol-containing component and the polyisocyanate-containing component comprises a urethane forming catalyst comprising an acid blocked amine or an organic metal compound.

27. The method according to clause 26, wherein the catalyst is present in an amount of 0.01 to 2 percent by weight, based on the total weight of the polyurethane diverting agent.

28. An oil and gas well containing a polyurethane diverting agent comprising a polyol-containing component and a polyisocyanate-containing component, wherein (i) the polyol-containing component comprises a polymeric polyol having a viscosity at 25°C of no more than 1000 mPa•s and at least 99% solids content, and (ii) the polyisocyanate-containing component comprises an unblocked (cyclo)aliphatic polyisocyanate polymer comprising allophanate groups and having a viscosity at 25°C of no more than 1000 mPa•s and at least 99% solids content, and wherein the oil and gas well is complete and partially depleted.

29. The oil and gas well according to clause 28, wherein the polymeric polyol comprises a polyalkoxylated triol.

30. The oil and gas well according to clause 29, wherein the polyalkoxylated triol comprises a polypropylene-oxide triol.

31. The oil and gas well according to clause 30, wherein the polypropylene-oxide triol has a hydroxyl number of 350 to 390 mg KOH/gram, a water content of less than 0.05% by weight, based on the total weight of the polymeric polyol, and a viscosity at 25°C of 520 to 700 mPa•s and at least 99% solids content.

32. The oil and gas well according to one of clauses 28 to 31, wherein the unblocked (cyclo)aliphatic polyisocyanate polymer is derived from an isocyanate starting material comprising hexamethylene diisocyanate.

33. The oil and gas well according to clause 32, wherein the isocyanate starting material consists essentially of hexamethylene diisocyanate.

34. The oil and gas well according to clause 32, wherein the unblocked (cyclo)aliphatic polyisocyanate polymer comprises a trimerized reaction product hexamethylene diisocyanate.

35. The oil and gas well according to clause 34, wherein the unblocked (cyclo)aliphatic polyisocyanate polymer has an isocyanate content of 10 to 24 weight percent, (2) a viscosity at 25°C of 50 to 900 mPa•s, (3) a monomeric isocyanate content of less than 1 percent by weight, and (4) at least 99% solids content.

36. The oil and gas well according to one of clauses 28 to 35, wherein at least one of the polyol-containing component and the polyisocyanate-containing component comprises a urethane forming catalyst comprising an acid blocked amine or an organic metal compound.

37. The oil and gas well according to clause 36, wherein the catalyst is present in an amount of 0.01 to 2 percent by weight, based on the total weight of the polyurethane diverting agent.

38. A method of hydraulically refracturing a partially depleted underground geologic formation comprising: (a) preparing a polyurethane diverting agent by surface mixing a polyol-containing component and a polyisocyanate-containing component; (b) introducing the polyurethane diverting agent into the formation; and (c) forcing the polyurethane diverting agent into pores of the formation under sufficient pressure and for a sufficient time such that the polyol-containing component and the polyisocyanate-containing component react to form a solid polyurethane reaction product that seals the existing perforations and associated fractures of the formation, wherein (i) the polyol-containing component comprises a polymeric polyol having a viscosity at 25°C of no more than 1000 mPa•s and at least 99% solids content, and (ii) the polyisocyanate-containing component comprises an unblocked (cyclo)aliphatic polyisocyanate polymer comprising allophanate groups and having a viscosity at 25°C of no more than 1000 mPa•s and at least 99% solids content; and (d) forcing a slurry comprising a plurality of proppant particles suspended in a carrier fluid into the formation under sufficient pressure and for a sufficient time such that new fissures and cracks are formed in the formation.

39. A polyurethane diverting agent comprising a mixture of a polyol-containing component and a polyisocyanate-containing component, wherein (i) the polyol-containing component comprises a polymeric polyol having a viscosity

at 25°C of no more than 1000 mPa•s and at least 99% solids content, and (ii) the polyisocyanate-containing component comprises an unblocked (cyclo)aliphatic polyisocyanate polymer, optionally comprising allophanate groups, having a viscosity at 25°C of no more than 1000 mPa•s and at least 99% solids content.

40. The polyurethane diverting agent according to clause 39, wherein the polymeric polyol comprises a polyalkoxylated triol.

41. The polyurethane diverting agent according to clause 40, wherein the polyalkoxylated triol comprises a polypropylene-oxide triol.

42. The polyurethane diverting agent according to clause 41, wherein the polypropylene-oxide triol has a hydroxyl number of 350 to 390 mg KOH/gram, a water content of less than 0.05% by weight, based on the total weight of the polymeric polyol, and a viscosity at 25°C of 520 to 700 mPa•s and at least 99% solids content.

43. The polyurethane diverting agent according to one of clauses 39 to 42, wherein the unblocked (cyclo)aliphatic polyisocyanate polymer is derived from an isocyanate starting material comprising hexamethylene diisocyanate.

44. The polyurethane diverting agent according to clause 43, wherein the isocyanate starting material consists essentially of hexamethylene diisocyanate.

45. The polyurethane diverting agent according to clause 43, wherein the unblocked (cyclo)aliphatic polyisocyanate polymer comprises a trimerized reaction product hexamethylene diisocyanate.

46. The polyurethane diverting agent according to one of clauses 39 to 45, wherein the unblocked (cyclo)aliphatic polyisocyanate polymer has an isocyanate content of 10 to 24 weight percent, (2) a viscosity at 25°C of 50 to 900 mPa•s, (3) a monomeric isocyanate content of less than 1 percent by weight, and (4) at least 99% solids content.

47. The polyurethane diverting agent according to one of clauses 39 to 46, wherein at least one of the polyol-containing component and the polyisocyanate-containing component comprises a urethane forming catalyst comprising an acid blocked amine or an organic metal compound.

48. The polyurethane diverting agent according to clause 47 wherein the catalyst is present in an amount of 0.01 to 2 percent by weight, based on the total weight of the polyurethane diverting agent.

49. The polyurethane diverting agent according to one of clauses 39 to 48, wherein the polyol-containing component further comprises a polyaspartic ester.

## Claims

**1.** A method of treating a completed oil and gas well that has been partially depleted prior to refracturing within an underground formation, comprising:

(a) preparing a polyurethane diverting agent by surface mixing a polyol-containing component and a polyisocyanate-containing component;
(b) introducing the polyurethane diverting agent into the formation; and
(c) forcing the polyurethane diverting agent into pores of the formation under sufficient pressure and for a sufficient time such that the polyol-containing component and the polyisocyanate-containing component react to form a solid polyurethane reaction product that seals the existing perforations and associated fractures of the formation, wherein

(i) the polyol-containing component comprises a polymeric polyol having a viscosity at 25°C of no more than 1000 mPa•s and at least 99% solids content, and
(ii) the polyisocyanate-containing component comprises an unblocked (cyclo)aliphatic polyisocyanate polymer, optionally comprising allophanate groups, and having a viscosity at 25°C of no more than 1000 mPa•s and at least 99% solids content.

**2.** The method according to Claim 1, wherein the polymeric polyol comprises a polyalkoxylated triol.

**3.** The method according to Claim 2, wherein the polyalkoxylated triol comprises a polypropylene-oxide triol.

**4.** The method according to Claim 3, wherein the polypropylene-oxide triol has a hydroxyl number of 350 to 390 mg KOH/gram, a water content of less than 0.05% by weight, based on the total weight of the polymeric polyol, and a viscosity at 25°C of 520 to 700 mPa•s and at least 99% solids content.

**5.** The method according to Claim 1, wherein the unblocked (cyclo)aliphatic polyisocyanate polymer is derived from an isocyanate starting material comprising hexamethylene diisocyanate.

**6.** The method according to Claim 5, wherein the isocyanate starting material consists essentially of hexamethylene diisocyanate.

**7.** The method according to Claim 6, wherein the unblocked (cyclo)aliphatic polyisocyanate polymer comprises a trimerized reaction product hexamethylene diisocyanate.

**8.** The method according to Claim 7, wherein the unblocked (cyclo)aliphatic polyisocyanate polymer has an isocyanate content of 10 to 24 weight percent, (2) a viscosity at 25°C of 50 to 900 mPa•s, (3) a monomeric isocyanate content of less than 1 percent by weight, and (4) at least 99% solids content.

**9.** The method according to Claim 1, wherein at least one of the polyol-containing component and the polyisocyanate-containing component comprises a urethane forming catalyst comprising an acid blocked amine or an organic metal compound.

**10.** The method according to Claim 9, wherein the catalyst is present in an amount of 0.01 to 2 percent by weight, based on the total weight of the polyurethane diverting agent.

**11.** A polyurethane diverting agent comprising a mixture of a polyol-containing component and a polyisocyanate-containing component, wherein

(i) the polyol-containing component comprises a polymeric polyol having a viscosity at 25°C of no more than 1000 mPa•s and at least 99% solids content, and
(ii) the polyisocyanate-containing component comprises an unblocked (cyclo)aliphatic polyisocyanate polymer, optionally comprising allophanate groups, having a viscosity at 25°C of no more than 1000 mPa•s and at least 99% solids content.

**12.** The polyurethane diverting agent according to Claim 10, wherein the polymeric polyol comprises a polyalkoxylated triol.

**13.** The polyurethane diverting agent according to Claim 12, wherein the polyalkoxylated triol comprises a polypropylene-oxide triol.

**14.** The polyurethane diverting agent according to Claim 13, wherein the polypropylene-oxide triol has a hydroxyl number of 350 to 390 mg KOH/gram, a water content of less than 0.05% by weight, based on the total weight of the polymeric polyol, and a viscosity at 25°C and at least 99% solids of 520 to 700 mPa•s.

**15.** The polyurethane diverting agent according to one of claims 11 to 14, wherein the unblocked (cyclo)aliphatic polyisocyanate polymer is derived from an isocyanate starting material comprising hexamethylene diisocyanate.

Europäisches Patentamt
European Patent Office
Office européen des brevets

# EUROPEAN SEARCH REPORT

Application Number
EP 18 17 5811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/166872 A1 (ZIELINSKI DAVID P [US] ET AL) 18 June 2015 (2015-06-18) * claims * ----- | 1-15 | INV. C09K8/508 |
| X | CN 106 459 737 A (COVESTRO LLC; ECOLAB USA INC) 22 February 2017 (2017-02-22) * claims * ----- | 1-15 | |
| A | US 4 715 746 A (MANN MAX [DE] ET AL) 29 December 1987 (1987-12-29) * claims * ----- | 1-15 | |
| A | DE 101 14 651 C1 (CARBOTECH FOSROC GMBH [DE]) 8 May 2002 (2002-05-08) * claims * ----- | 1-15 | |
| | | | TECHNICAL FIELDS SEARCHED (IPC) |
| | | | C09K |

The present search report has been drawn up for all claims

1

| Place of search | Date of completion of the search | Examiner |
|---|---|---|
| Munich | 4 October 2018 | Zimpfer, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 17 5811

This annex lists the patent family members relating to the patent documents cited in the above-mentioned European search report. The members are as contained in the European Patent Office EDP file on The European Patent Office is in no way liable for these particulars which are merely given for the purpose of information.

04-10-2018

| Patent document cited in search report | Publication date | Patent family member(s) | Publication date |
|---|---|---|---|
| US 2015166872 A1 | 18-06-2015 | AU 2014366429 A1 | 30-06-2016 |
| | | CA 2933833 A1 | 25-06-2015 |
| | | CN 106459737 A | 22-02-2017 |
| | | EP 3083873 A1 | 26-10-2016 |
| | | US 2015166872 A1 | 18-06-2015 |
| | | WO 2015094880 A1 | 25-06-2015 |
| CN 106459737 A | 22-02-2017 | AU 2014366429 A1 | 30-06-2016 |
| | | CA 2933833 A1 | 25-06-2015 |
| | | CN 106459737 A | 22-02-2017 |
| | | EP 3083873 A1 | 26-10-2016 |
| | | US 2015166872 A1 | 18-06-2015 |
| | | WO 2015094880 A1 | 25-06-2015 |
| US 4715746 A | 29-12-1987 | AU 584168 B2 | 18-05-1989 |
| | | CA 1260253 A | 26-09-1989 |
| | | DE 3502997 A1 | 31-07-1986 |
| | | EP 0246234 A1 | 25-11-1987 |
| | | JP S62501916 A | 30-07-1987 |
| | | PL 257688 A1 | 21-10-1986 |
| | | US 4715746 A | 29-12-1987 |
| | | WO 8604600 A1 | 14-08-1986 |
| | | ZA 8600668 B | 29-10-1986 |
| DE 10114651 C1 | 08-05-2002 | AU 779419 B2 | 20-01-2005 |
| | | DE 10114651 C1 | 08-05-2002 |
| | | PL 352956 A1 | 07-10-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5126170 A
- US 5236741 A
- US 5489704 A
- US 5243012 A
- US 5736604 A
- US 6458293 B
- US 6833424 B
- US 7169876 B
- US 20060247371 A
- US 4810820 A
- US 5124427 A
- US 5208334 A
- US 5444146 A
- US 6013690 A
- US 5973099 A
- US 4219624 A
- US 5112878 A
- US 5183583 A
- US 5789533 A
- US 6395796 B
- US 6432864 B
- US 6525107 B


### Non-patent literature cited in the description


- Rompp's Chemical Dictionary. Georg Thieme Verlag, 1996